# EUROPEAN PATENT APPLICATION

(11) **EP 4 822 399 A1**
(43) Date of publication of application: **14.10.2026**
(21) Application number: 24900782.4
(22) Date of filing: 27.08.2024
(51) Int. Cl.: G01S 17/89, G01S 7/40

(54) **IMAGE SENSOR AND CONTROL METHOD THEREFOR**

(30) Priority: 06.12.2023 KR 20230176017
(71) Applicant: LX Semicon Co., Ltd., Daejeon 34027 (KR)
(72) Inventor: LEE, Sang Jin, Daejeon 34027 (KR); JANG, Hoon, Daejeon 34027 (KR)
(74) Representative: Ter Meer und Partner mbB
(86) International application number: PCT/KR2024/012744
(87) International publication number: WO 2025/121594

(57) **Abstract**

An image sensor according to an embodiment of the present invention includes a light emitter emitting a signal consisting of one frequency, one lens and a plurality of photodiodes receiving a signal reflected from an object, and a controller. For example, the controller groups signals received by the plurality of photodiodes and calculates a location of the object by using a difference between a signal of a first group and a signal of a second group.

## Description

### [Technical Field]

The present invention relates to a technology associated with an image sensor, and for example, may be applied to a time of flight (ToF), but is not limited thereto.

### [Background Art]

In a method in which an image sensor obtains a three-dimensional (3D) image, there are, for example, the stereo vision technology, the structured light technology, and the time of flight (ToF) technology. Particularly, the ToF technology is classified into the indirect ToF (I-ToF) technology that uses a phase difference according to a distance measurement scheme and the direct ToF (D-ToF) technology that directly measures a time difference.

The direct ToF technology may require complicated hardware and higher power consumption. On the other hand, the indirect ToF technology is relatively low in hardware cost, and thus, is being used in various commercial products.

For example, in the indirect ToF technology, an emitter irradiates light, and a reception signal reflected from an object is analyzed. In addition, because a phase shift occurs in the reception signal according to a distance between a ToF system and the object, the distance may be calculated based on the degree of phase shift.

However, because the phase shift is repeated with a period of 2π, according to the conventional technology, a measurement range of an indirect ToF is extended by using the multi-frequency modulation technique.

However, when multiple frequencies are used, a problem occurs where latency where response time slows down increases, and power consumption increases also.

Furthermore, additionally, a performance of a depth frame rate is degraded, and when a camera moves or an object moves, performance is further degraded.

Here, the depth frame rate may denote, for example, the number of depth data frames that may be captured per second by using a sensor.

### [Disclosure]

### [Technical Problem]

An embodiment of the present disclosure is directed to solving the above-described problems and has an object of preventing an increase in power consumption of an image sensor, such as an indirect ToF image sensor, caused by the use of multiple frequencies.

### [Technical Solution]

To accomplish the above-described objects, an image sensor according to an embodiment of the present invention includes a light emitter emitting a signal having a single frequency, one lens and a plurality of photodiodes receiving a signal reflected from an object, and a controller. For example, the controller groups signals received by the plurality of photodiodes and calculates a location of the object by using a difference between a signal of a first group and a signal of a second group.

In addition, when the plurality of photodiodes are four, for example, the first group includes two photodiodes disposed on a left location, and the second group includes two photodiodes disposed on a right location.

Further, for example, the controller may compare a first amplitude of the signal of the first group with a second amplitude of the signal of the second group.

Furthermore, for example, when there is no disparity between the first amplitude and the second amplitude, the controller determines that the object is disposed on an in-focus location, and when there is a disparity between the first amplitude and the second amplitude, the controller determines that the object is disposed on an out-of-focus location.

Moreover, a control method of an image sensor according to an embodiment of the present invention includes a step of emitting a signal having a single frequency, a step of receiving a signal reflected from an object through one lens and a plurality of photodiodes, a step of grouping signals received by the plurality of photodiodes, and a step of calculating a location of the object by using a difference between a signal of a first group and a signal of a second group.

### [Advantageous Effect]

According to an embodiment of the present invention, unlike a conventional technique using multiple frequencies in an indirect ToF sensor, there is a technical effect in that power consumption may be reduced by using a single frequency.

Furthermore, unlike a conventional technique using eight subframes, the present invention has a technical effect of enhancing a frame rate by using only four subframes.

In addition, according to an embodiment of the present invention, since an integration time is shortened, motion blur and a depth error may be reduced. In situations where an object moves or a camera including an image sensor moves, motion blur occurs, and due to this, an error of a depth image appears.

Meanwhile, the integration time used herein denotes an exposure period in which an optical signal is irradiated onto an object. That is, the integration time denotes a time for which a pixel receives reflected light to generate an electric charge, in order to obtain distance information.

### [Description of Drawings]

FIG. 1 shows multiple frequencies used in an image sensor of a conventional technology.
FIG. 2 shows a process where an image sensor calculates a distance by using one photodiode and one tap.
FIG. 3 shows a graph of a transmission signal and a reception signal obtained through the process shown in FIG. 2.
FIG. 4 shows a process where an image sensor calculates a distance by using one photodiode and two taps.
FIG. 5 shows one actual location and a plurality of possible locations of an object spaced apart from an image sensor.
FIG. 6 shows a plurality of photodiodes included in an image sensor according to an embodiment of the present invention.
FIG. 7 shows a process where an image sensor according to an embodiment of the present invention processes signals received by a plurality of photodiodes by using one frequency.
FIG. 8 shows a process where an image sensor according to an embodiment of the present invention groups signals received by a plurality of photodiodes.
FIG. 9 shows a disparity in an amount of light of signals received by a plurality of photodiodes of an image sensor according to an embodiment of the present invention.
FIG. 10 shows a case where a disparity between amplitudes of signals grouped by an image sensor according to an embodiment of the present invention occurs.
FIG. 11 shows a graph that may be used by an image sensor according to an embodiment of the present invention to estimate a location of an object by using a disparity between amplitudes.
FIG. 12 shows a left image and a right image generated based on pixel information grouped by an image sensor according to an embodiment of the present invention.
FIG. 13 is a block diagram showing elements of an image sensor according to an embodiment of the present invention.
FIG. 14 is a flowchart showing a control method of an image sensor according to an embodiment of the present invention.
In addition, FIG. 15 is a flowchart showing a control method of an image sensor according to another embodiment of the present invention.

### [Mode for Invention]

Advantages and features of the present invention, and methods for achieving the same, will become apparent with reference to embodiments described in detail below with reference to the accompanying drawings. However, the present invention is not limited to embodiments disclosed below and may be implemented in various different forms. Embodiments are provided only to make the disclosure of the present invention complete and to fully convey the scope of the present invention to those skilled in the art, and the present invention is defined by only the scope of the claims.

Throughout the specification, like reference numerals refer to substantially the same elements. In the following description, detailed descriptions of configurations and functions known in the art and not directly related to the core of the present invention may be omitted.

As used herein, when terms such as "include", "have", and "comprise" are used, other elements may be added unless the term "only" is used. When an element is expressed in the singular, it may include the plural unless otherwise explicitly stated.

In construing an element, the element may be interpreted as including a tolerance range even if not explicitly stated.

Terms such as "first" and "second" may be used to describe various elements, but the elements are not limited by these terms. These terms are used only to distinguish one element from another. Accordingly, a first element described below may be a second element within the technical spirit of the present invention.

The term "at least one" should be understood to include any and all combinations of one or more associated items. For example, the meaning of "at least one of a first item, a second item, and a third item" may include not only each of the first item, the second item, and the third item, but also any combination of two or more of the first item, the second item, and the third item.

Each of the features of various embodiments of the present invention may be partially or entirely combined or associated with each other and may be technically interlocked and operated in various manners. Each of embodiments may be implemented independently of each other or may be implemented together in an associated relationship.

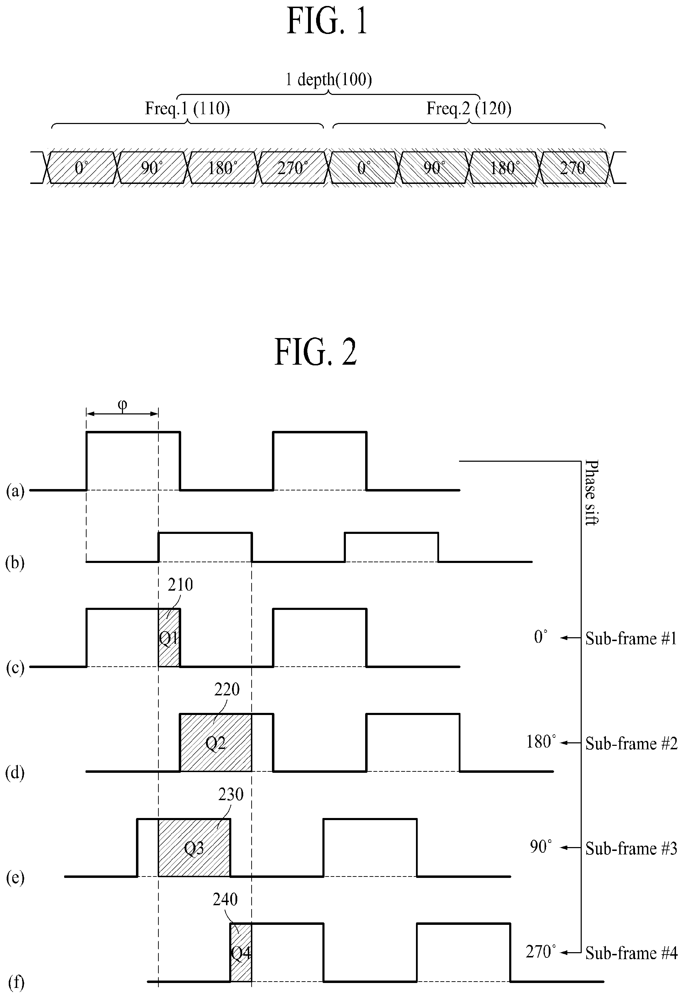

FIG. 1 shows multiple frequencies used in an image sensor according to a conventional technology.

In case of an indirect ToF sensor that is one type of image sensor, according to a conventional technology, as shown in FIG. 1, one piece of depth information 100 may be obtained by using a plurality of different frequencies such as a first frequency 110 and a second frequency 120.

In a case which is designed in this manner, the image sensor has an advantage in that the image sensor may measure a relatively longer distance by using a relationship between multiple frequencies.

However, because one depth map is generated by repeatedly performing modulation and demodulation of multiple frequencies, a problem occurs where power consumption increases, and motion blur occurs, and due to this, a depth frame rate is reduced.

FIG. 2 shows a process where an image sensor calculates a distance by using one photodiode and one tap.

FIG. 2(a) is a graph of irradiated light, FIG. 2(b) is a graph of reflected light, FIG. 2(c) is a graph of a reference signal having a phase difference of 0 degrees with respect to the irradiated light, FIG. 2(d) is a graph of a reference signal having a phase difference of 180 degrees with respect to the irradiated light, FIG. 2(e) is a graph of a reference signal having a phase difference of 90 degrees with respect to the irradiated light, and FIG. 2(f) is a graph of a reference signal having a phase difference of 270 degrees with respect to the irradiated light.

As shown in FIG. 2, the reflected light may have a phase that is delayed by a distance by which the irradiated light is reflected after being incident on an object.

At this time, the image sensor may provide reference signals (FIGS. 2(c) to 2(f)) to each pixel so as to calculate a phase difference.

The image sensor may generate an electrical signal from the reflected light, based on the reference signal. In other words, the image sensor may expose an effective region corresponding to each reference signal and may receive the reflected light for an exposed time (exposure time).

Further, when the reference signal is on (positive), the image sensor may charge an electric charge from the reflected light to generate an electrical signal. Accordingly, the image sensor may generate electrical signals corresponding to shaded regions 210, 220, 230, and 240 of FIG. 2.

Q1 210 represents the amount of electric charge of an electrical signal corresponding to a reference signal having the same phase as a signal of the irradiated light. Q2 220 represents the amount of electric charge of an electrical signal corresponding to a reference signal having a phase that is delayed by 180 degrees relative to the signal of the irradiated light. Q3 230 represents the amount of electric charge of an electrical signal corresponding to a reference signal having a phase that is delayed by 90 degrees relative to the signal of the irradiated light. Q4 240 represents the amount of electric charge of an electrical signal corresponding to a reference signal having a phase that is delayed by 270 degrees relative to the signal of the irradiated light.

The image sensor may calculate a phase difference between the signal of the irradiated light and a signal of the reflected light by using the amount of electric charge described above, as expressed in the following Equation 1. [Equation 1] $φ = {tan}^{- 1} \left(\frac{Q 4 - Q 3}{Q 1 - Q 2}\right)$

The image sensor may calculate a distance to the object by using the phase difference, as shown in the following Equation 2. [Equation 2] $Distance = \frac{c}{2 {f}_{mod}} \times \frac{φ}{2 π}$

Here, *c* denotes a speed of light, and *f*mod denotes a frequency of the irradiated light.

Moreover, an amplitude of the reflected light may be obtained through an equation such as the following Equation 3. [Equation 3] $Amplitude = \sqrt{{\left(Q1-Q2\right)}^{2} + {\left(Q4-Q3\right)}^{2}}$

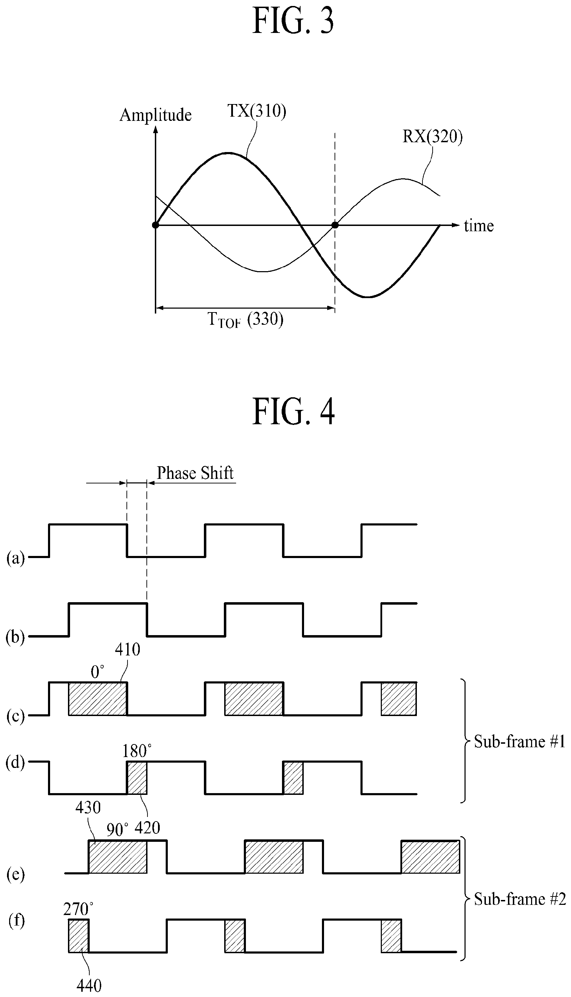

FIG. 3 shows a graph of a transmission signal and a reception signal obtained through the process shown in FIG. 2.

A curve 310 of a transmission signal shown in FIG. 3 denotes a change in amplitude of the irradiated light over time shown in FIG. 2(a), and a curve 320 of a reception signal shown in FIG. 3 denotes a change in amplitude of the reflected light over time shown in FIG. 2(b).

Further, a distance between the image sensor and the object may be estimated by using a time difference 330 between the curve 310 of the transmission signal and the curve 320 of the reception signal.

FIG. 4 shows a process where an image sensor calculates a distance by using one photodiode and two taps.

FIG. 4(a) is a graph of irradiated light, FIG. 4(b) is a graph of reflected light, FIG. 4(c) is a graph of a reference signal having a phase difference of 0 degrees with respect to the irradiated light, FIG. 4(d) is a graph of a reference signal having a phase difference of 180 degrees with respect to the irradiated light, FIG. 4(e) is a graph of a reference signal having a phase difference of 90 degrees with respect to the irradiated light, and FIG. 4(f) is a graph of a reference signal having a phase difference of 270 degrees with respect to the irradiated light.

In addition, when the reference signal is on (positive), the image sensor may charge an electric charge from the reflected light to generate an electrical signal. Accordingly, the image sensor may generate electrical signals corresponding to shaded regions 410, 420, 430, and 440 of FIG. 4.

Q1 410 represents the amount of electric charge of an electrical signal corresponding to a reference signal having the same phase as a signal of the irradiated light. Q2 420 represents the amount of electric charge of an electrical signal corresponding to a reference signal having a phase that is delayed by 180 degrees relative to the signal of the irradiated light. Q3 430 represents the amount of electric charge of an electrical signal corresponding to a reference signal having a phase that is delayed by 90 degrees relative to the signal of the irradiated light. Q4 440 represents the amount of electric charge of an electrical signal corresponding to a reference signal having a phase that is delayed by 270 degrees relative to the signal of the irradiated light.

As shown in FIG. 4, a distance may be determined by calculating a degree of phase shift between the irradiated light and incident light, based on the amounts of electric charges 410, 420, 430, and 440 obtained in two subframes (0 degrees/180 degrees and 90 degrees/270 degrees).

For reference, in the case of a 2-tap ToF sensor shown in FIG. 4, although it is theoretically possible to obtain a degree of phase shift by using two subframes, four subframes may also be used.

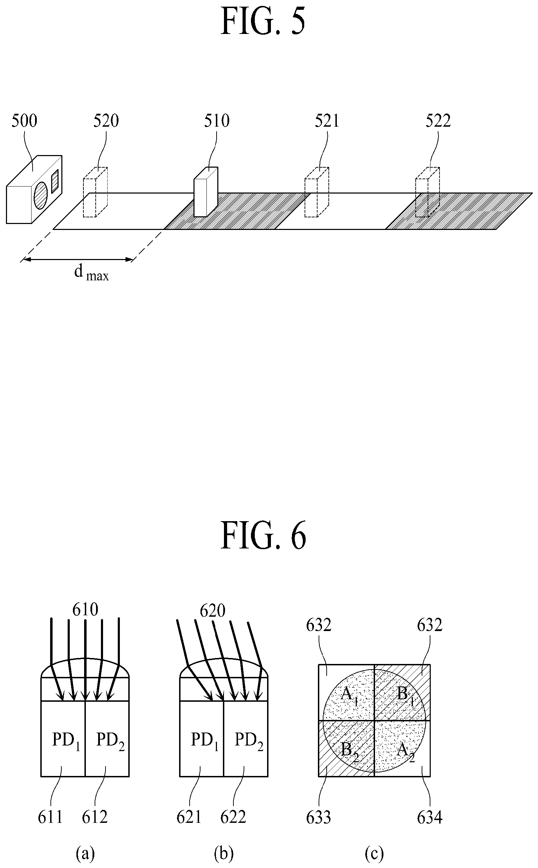

FIG. 5 shows one actual location and a plurality of possible locations of an object spaced apart from an image sensor.

Based on the method described in FIGS. 2 to 4, when an image sensor 500 measures a degree of phase shift between irradiated light and reflected light, a plurality of possible locations 520, 510, 521, and 522 may be calculated, but when the irradiated light uses only one frequency, a case where it is unable to specify an actual location 510 occurs. As described above, this is because a phase shift is repeated with a period of 2π.

However, when a plurality of photodiodes are used like a dual-pixel or a quad-pixel, embodiments where a location of an object is more accurately calculated with only one frequency by using disparity information on a specific group will be described below with reference to FIG. 6 and the like.

FIG. 6 shows a plurality of photodiodes included in an image sensor according to an embodiment of the present invention.

FIGS. 6(a) and 6(b) schematically show pixel structures used in a phase detection auto focus (PDAF) of a dual-pixel, and FIG. 6(c) schematically shows a pixel structure used in a PDAF of a quad-pixel.

Particularly, FIG. 6(a) shows a case where reflected light 610 is equally received by a first photodiode 611 and a second photodiode 612. On the other hand, FIG. 6(b) shows a case where reflected light 620 is differently received by a third photodiode 621 and a fourth photodiode 622.

Moreover, in FIG. 6(c), reflected light may be received through four photodiodes 631, 632, 633, and 634.

In addition, according to an embodiment of the present invention, a distance to an object is estimated with only one frequency by using a difference between signals received through a specific group among a plurality of photodiodes.

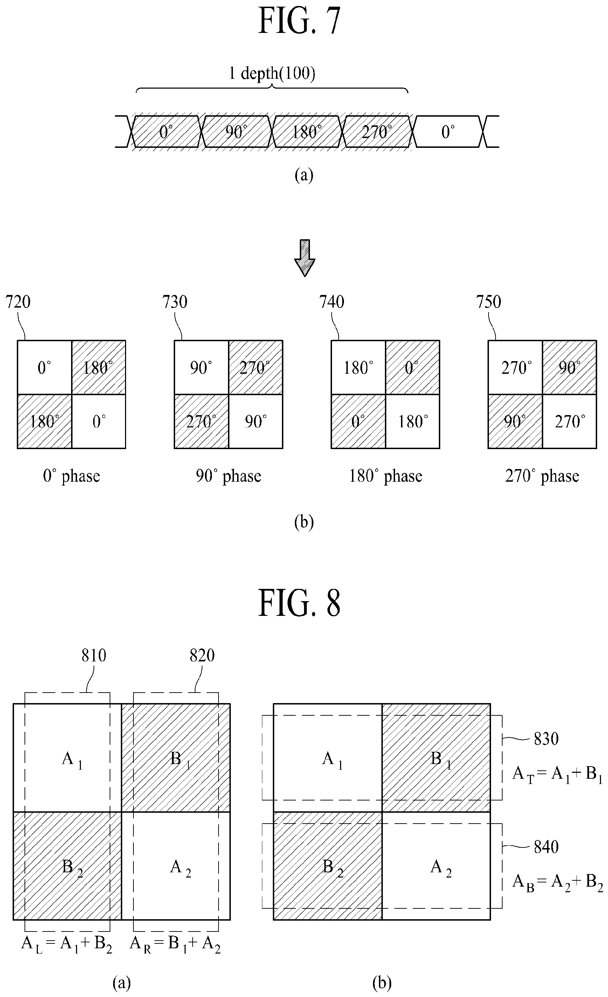

FIG. 7 shows a process where an image sensor according to an embodiment of the present invention processes signals received by a plurality of photodiodes by using one frequency.

As shown in FIG. 7(a), an embodiment of the present invention uses a frame 710 consisting of one frequency, and a corresponding frame is configured with four subframes.

Because the conventional technology of FIG. 1 described above uses multiple frequencies, the number of required subframes (eight) increases. In contrast, because an embodiment of the present invention is implemented with a single frequency, the number of subframes needed for one depth frame is four and is relatively small. Accordingly, the use of a light emitter may be reduced. Particularly, the light emitter is a cause of power consumption in an indirect ToF sensor, but has a technical effect capable of solving the above-described problem.

According to an embodiment of the present invention, disparity information is obtained from phase data. The above-described PDAF structure is configured with, for example, one microlens and a plurality of photodiodes.

In addition, as shown in FIG. 7(b), an intensity level (for example, an amplitude, etc.) may vary for each photodiode.

For example, reference numeral 720 of FIG. 7 corresponds to four photodiodes for a reference signal having a phase difference of 0 degrees with respect to irradiated light, reference numeral 730 of FIG. 7 corresponds to four photodiodes for a reference signal having a phase difference of 90 degrees with respect to the irradiated light, reference numeral 740 of FIG. 7 corresponds to four photodiodes for a reference signal having a phase difference of 180 degrees with respect to the irradiated light, and reference numeral 750 of FIG. 7 corresponds to four photodiodes for a reference signal having a phase difference of 270 degrees with respect to the irradiated light.

Accordingly, an amplitude value may be obtained for each of photodiodes which are disposed on upper, lower, left, and right locations.

Particularly, the image sensor according to an embodiment of the present invention uses amplitude values obtained by grouping specific photodiodes, and an embodiment relevant thereto will be described below with reference to FIG. 8.

FIG. 8 shows a process where an image sensor according to an embodiment of the present invention groups signals received by a plurality of photodiodes.

The image sensor according to an embodiment of the present invention may group signals received by a plurality of photodiodes.

For example, as shown in FIG. 8(a), the image sensor groups photodiodes, disposed on a left location, into a first group 810 and calculates a first amplitude AL of signals of the first group 810. The first amplitude AL may use, for example, a result obtained by summing an amplitude of a photodiode A1 disposed on an upper left location and an amplitude of a photodiode B2 disposed on a lower left location, but the present invention is not limited thereto.

Furthermore, the image sensor groups photodiodes, disposed on a right location, into a second group 820 and calculates a second amplitude AR of signals of the second group 820. The second amplitude AR may use, for example, a result obtained by summing an amplitude of a photodiode B1 disposed on an upper right location and an amplitude of a photodiode A2 disposed on a lower right location, but the present invention is not limited thereto.

Moreover, as shown in FIG. 8(b), the image sensor groups photodiodes, disposed on an upper location, into a third group 830 and calculates a third amplitude AT of signals of the third group 830. The third amplitude AT may use, for example, a result obtained by summing an amplitude of a photodiode A1 disposed on an upper left location and an amplitude of a photodiode B1 disposed on an upper right location, but the present invention is not limited thereto.

Furthermore, the image sensor groups photodiodes, disposed on a lower location, into a fourth group 840 and calculates a fourth amplitude AB of signals of the fourth group 840. The fourth amplitude AB may use, for example, a result obtained by summing an amplitude of a photodiode B2 disposed on a lower left location and an amplitude of a photodiode A2 disposed on a lower right location, but the present invention is not limited thereto.

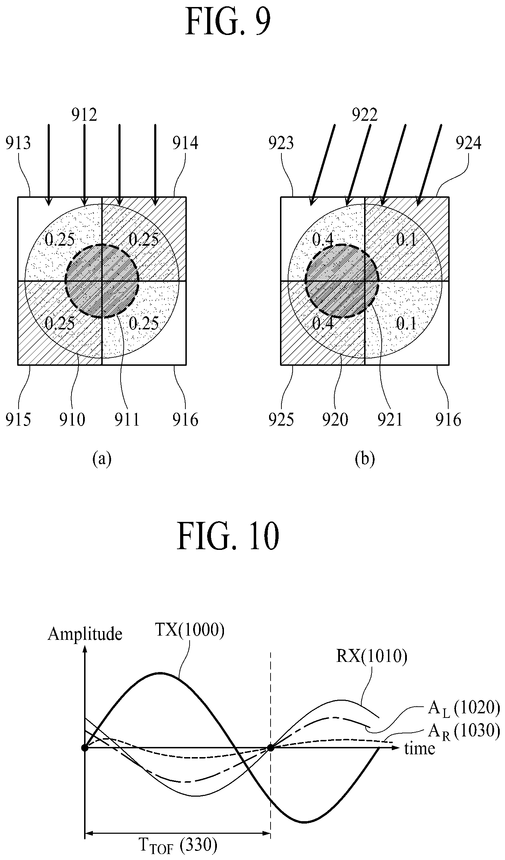

As described above, an embodiment of the present invention may be used to compare results of grouped photodiodes to estimate a distance to an object, and details relevant thereto will be described below with reference to FIG. 9.

FIG. 9 shows a disparity in an amount of light of signals received by a plurality of photodiodes of an image sensor according to an embodiment of the present invention.

When a plurality of photodiodes are disposed under one microlens, a disparity in the amount of light received by each photodiode occurs according to a focus difference.

As shown in FIG. 9(a), in a case which is in focus, an equal amount of light is incident on four photodiodes 913, 914, 915, and 916. Here, reference numeral 912 denotes reflected light, reference numeral 910 denotes a microlens, and reference numeral 911 denotes a ray focused by the microlens.

In contrast, in a case which is not in focus, for example, as shown in FIG. 9(b), the amount of light incident on photodiodes 923 and 925 disposed on a left location is greater than the amount of light incident on photodiodes 924 and 926 disposed on a right location.

Here, reference numeral 922 denotes reflected light, reference numeral 920 denotes a microlens, and reference numeral 921 denotes a ray focused by the microlens.

In summary, in a case which is in focus, there is no disparity between the amount of light incident on photodiodes disposed on the left location and the amount of light incident on photodiodes disposed on the right location.

In contrast, in a case which is not in focus, a disparity between the amount of light incident on the photodiodes disposed on the left location and the amount of light incident on the photodiodes disposed on the right location occurs.

In more detail, for example, when the amount of light incident on the photodiodes disposed on the right location is relatively greater, this may correspond to a back-focus instead of an in-focus. Further, when the amount of light incident on the photodiodes disposed on the left location is relatively greater, this may correspond to a front-focus instead of an in-focus.

FIG. 10 shows a case where a disparity between amplitudes of signals grouped by an image sensor according to an embodiment of the present invention occurs.

For reference, FIG. 9 shows a disparity in the amount of incident light for each photodiode, whereas FIG. 10 compares an amplitude of a signal, applied to a group of photodiodes disposed on the right location, with an amplitude of a signal applied to a group of photodiodes disposed on the left location.

A curve 1000 of a transmission signal shown in FIG. 10 denotes a change in amplitude of irradiated light over time, and a curve 1010 of a reception signal shown in FIG. 10 denotes a change in amplitude of reflected light over time.

Particularly, the present invention compares disparities in amplitudes of reflected light for a plurality of photodiodes.

For example, as shown in FIG. 10, when there is a disparity between an amplitude of a signal 1020 applied to photodiodes disposed on the left location and an amplitude of a signal 1030 applied to photodiodes disposed on the right location, this is a case which is not in focus.

In contrast, when there is no disparity between the amplitude of the signal 1020 applied to the photodiodes disposed on the left location and the amplitude of the signal 1030 applied to the photodiodes disposed on the right location, this is a case which is in focus.

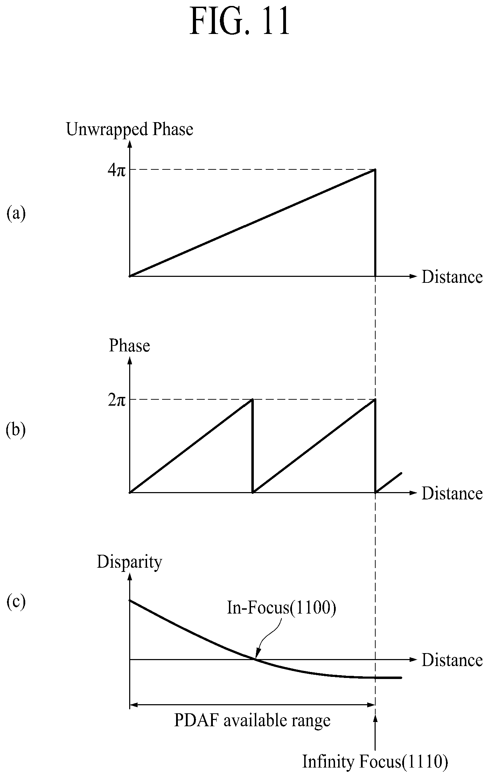

FIG. 11 shows a graph that may be used by an image sensor according to an embodiment of the present invention to estimate a location of an object by using a disparity between amplitudes.

FIG. 11(b) shows a discontinuous signal based on reflected light.

A phase of a signal is generally limited to a value between 0 and 2π. Wrapping occurs when an actual phase of the signal exceeds 2π or decreases to 0 or less.

Due to this, a phase measurement value differs from an actual phase. For example, even when the actual phase is 3π, a measured phase is 1π. Therefore, a case may occur where an image sensor such as an indirect ToF sensor is difficult to accurately calculate a distance to an object.

Accordingly, according to an embodiment of the present invention, as shown in FIG. 11(a), continuous phase information on a signal may be reconstructed, and a discontinuity of measured phase information may be removed.

In addition, FIG. 11(c) shows a change in disparity for each distance. Here, a disparity denotes an amplitude difference between signals received by photodiodes of a specific group.

Accordingly, when there is no disparity between an amplitude of a signal applied to photodiodes disposed on the left location and an amplitude of a signal applied to photodiodes disposed on the right location, this corresponds to an in-focus location 1100.

Meanwhile, after a location 1110 corresponding to an infinity focus, a depth of field becomes very large, and thus, most objects located beyond such a distance appear sharp. Accordingly, it is not needed to adjust a focus from this time.

That is, according to an embodiment of the present invention, for example, when a frequency of a signal output by a ToF sensor is repeated at least twice within an available range of a PDAF (up to a point corresponding to an infinity focus), a technical effect is more enhanced.

For example, as shown in FIG. 11(b), this is because, even when a frequency phase of a signal output by the ToF sensor overlaps two or more times within the available range of the PDAF, phase unwrapping is possible as shown in FIG. 11(a).

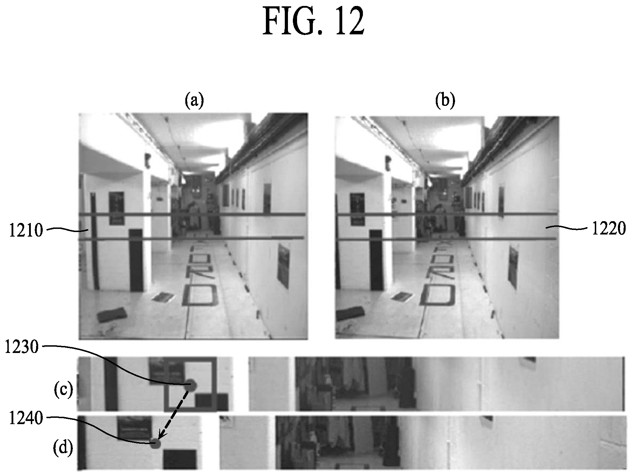

FIG. 12 shows a left image and a right image generated based on pixel information grouped by an image sensor according to an embodiment of the present invention.

FIG. 12(a) corresponds to a first image (left image) generated by using pixel information on photodiodes disposed on a left location, and FIG. 12(b) corresponds to a second image (right image) generated by using pixel information on photodiodes disposed on a right location.

FIG. 12(c) shows an enlarged view of a specific portion 1210 of the first image (left image) shown in FIG. 12(a), and FIG. 12(d) shows an enlarged view of a specific portion 1220 of the second image (right image) shown in FIG. 12(b).

Compared with each other, it may be confirmed that a location at which a phase is formed differs due to a disparity between an amplitude of a signal received through photodiodes disposed on the left location and an amplitude of a signal received through photodiodes disposed on the right location (locations of the same image 1230 and 1240 differ).

According to an embodiment of the present invention, 3D depth information may be calculated by measuring a disparity between amplitudes of signals received by left and right photodiodes or by measuring a disparity between amplitudes of signals received by upper and lower photodiodes. Particularly, the present invention may be more suitable for a PDAF structure that has a plurality of photodiodes and uses an active light source such as a ToF sensor, but the present invention is not limited thereto.

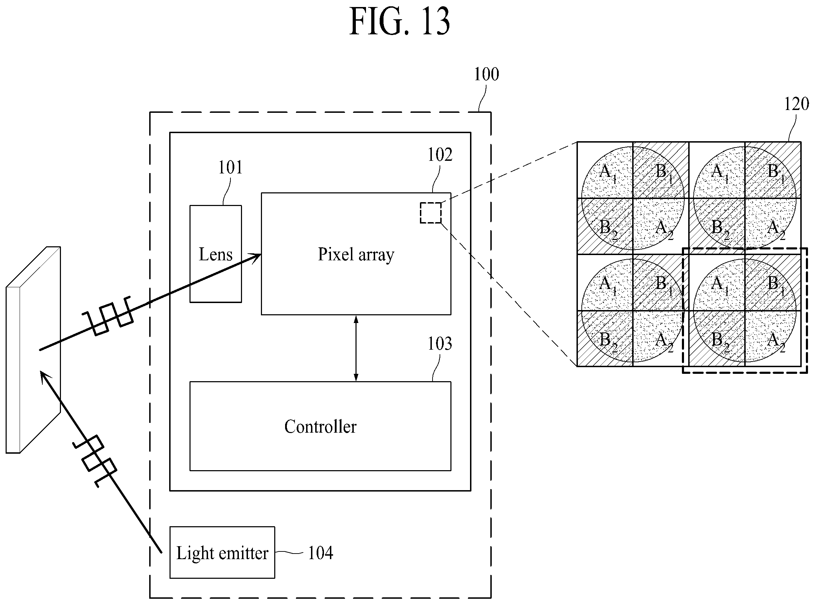

FIG. 13 is a block diagram showing elements of an image sensor according to an embodiment of the present invention.

As shown in FIG. 13, an image sensor 100 according to an embodiment of the present invention may include a lens 101, a pixel array 102, a controller 103, and a light emitter 104. However, some elements may be omitted, added, or modified according to needs of a person having ordinary skill in the art, and a scope of the present invention should be determined by the claims.

The light emitter 104 emits a signal having a single frequency. As a light source output from the light emitter 104, for example, a flash type or a dot type may be used.

However, when a dot-type light source is used, because a certain pattern is formed, it is easy to obtain disparity information between groups of photodiodes used in the present invention, and there is a technical effect where an accuracy of depth information is enhanced.

Moreover, a signal reflected from an object is received by a plurality of photodiodes 120 included in the pixel array 102 through the lens 101 (for example, a microlens).

The controller 103 groups signals received by the plurality of photodiodes 120 and calculates a location of the object by using a difference between a signal of a first group and a signal of a second group.

For example, when a plurality of photodiodes constituting one pixel are four, the first group includes two photodiodes disposed on a left location, and the second group includes two photodiodes disposed on a right location.

Furthermore, the controller 103 compares a first amplitude of the signal of the first group with a second amplitude of the signal of the second group. For example, graphs shown in FIGS. 9 and 10 may be referred to.

When there is no disparity between the first amplitude and the second amplitude, the controller 103 determines that the object is disposed on an in-focus location. In contrast, when there is a disparity between the first amplitude and the second amplitude, the controller 103 determines that the object is disposed on an out-of-focus location.

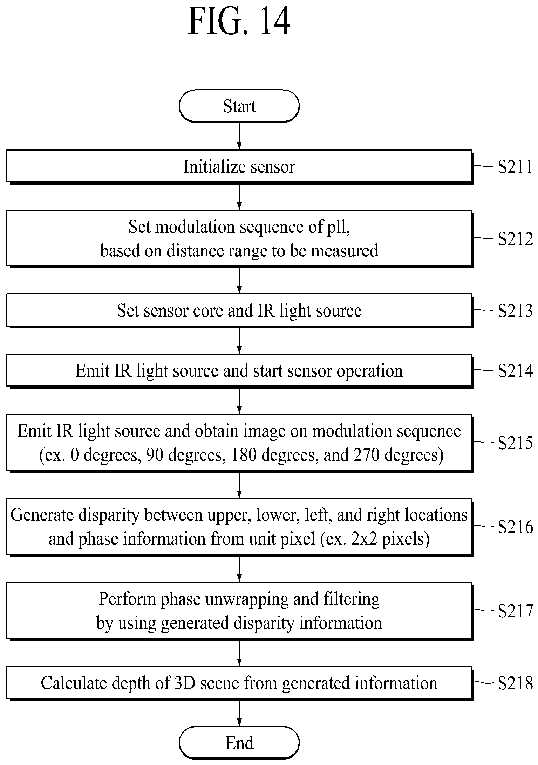

On the other hand, for example, one frequency used in the present invention is characterized in that the one frequency is repeated at least twice within a maximum distance of an infinity focus of the lens 101. FIG. 14 is a flowchart showing a control method of an image sensor according to an embodiment of the present invention.

First, a process of initializing an image sensor according to an embodiment of the present invention is performed (S211).

Furthermore, the image sensor sets a modulation sequence of a phase-locked loop (PLL), based on a distance range which is to be measured (S212).

In addition, the image sensor sets, for example, a sensor core and an infrared (IR) light source (S213) and starts an operation of the image sensor while emitting the IR light source (S214). Here, the sensor core may denote, for example, a controller that controls operations of elements in the image sensor. Further, when the image sensor is an indirect-type ToF sensor, a phase shift change may be controlled for each subframe.

In addition, the image sensor emits the IR light source and obtains an image with respect to the modulation sequence (for example, 0 degrees, 90 degrees, 180 degrees, and 270 degrees) which is set in step S212 (S215). Related embodiments have been described above with reference to FIG. 7.

Furthermore, the image sensor generates disparity and phase information on photodiodes disposed on upper, lower, left, and right locations from a unit pixel (S216). Related embodiments have been described above with reference to FIG. 10.

Finally, the image sensor performs phase unwrapping and a filtering operation by using the disparity information which is generated in operation S216 (S217) and calculates a depth of a 3D map (S218). The filtering operation in operation S217 invalidates data outside a distance range by using pre-set modulation frequency information and the disparity information generated in operation S216.

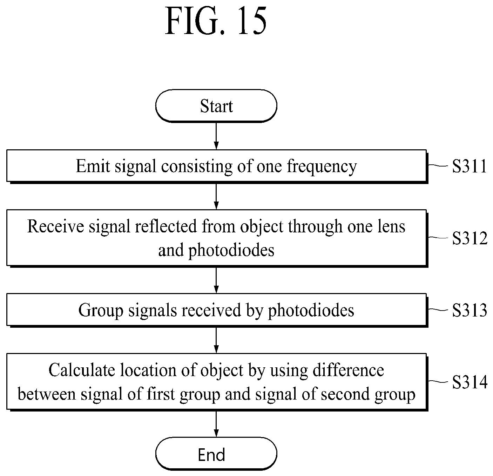

In addition, FIG. 15 is a flowchart showing a control method of an image sensor according to another embodiment of the present invention.

FIG. 15 is a flowchart showing a method for controlling an image sensor according to another embodiment of the present invention. However, supplement interpretation is possible in combination with preceding embodiments.

An image sensor according to an embodiment of the present invention emits a signal having a single frequency (S311) and receives a signal reflected from an object through one lens and a plurality of photodiodes (S312).

Furthermore, the image sensor groups signals received by the plurality of photodiodes and calculates a location of the object by using a difference between a signal of a first group and a signal of a second group (S314).

For example, when the plurality of photodiodes are four, the first group includes two photodiodes disposed on a left location, and the second group includes two photodiodes disposed on a right location. However, the present invention is not limited thereto, and photodiodes being grouped in an up-and-down direction may be within the scope of the present invention.

Although not shown in FIG. 15, the image sensor may additionally compare an amplitude of a signal of the first group with an amplitude of a signal of the second group.

When there is no disparity between a first amplitude and a second amplitude, the image sensor determines that the object is disposed on an in-focus location. In contrast, when there is a disparity between the first amplitude and the second amplitude, the image sensor determines that the object is disposed on an out-of-focus location.

Accordingly, the image sensor according to an embodiment of the present invention may more accurately detect a location of the object. As described above, the image sensor may correspond to, for example, an indirect ToF sensor, but the present invention is not limited thereto.

Those skilled in the art to which the present invention pertains may be understand that the present invention may be implemented in other specific forms without departing from the technical spirit or essential features thereof.

Accordingly, the embodiments described above should be understood as illustrative in all respects and not limiting. The scope of the present invention is defined by the claims described below rather than the foregoing detailed description, and all changes or modifications derived from the meaning, scope, and equivalents of the claims should be interpreted as being included in the scope of the present invention.

### [Industrial Applicability]

Because the present invention may be applied to various image sensors such as a ToF sensor, industrial applicability is recognized.

## Claims

1. An image sensor comprising:
a light emitter emitting a signal having a single frequency;
one lens and a plurality of photodiodes receiving a signal reflected from an object; and
a controller,
wherein the controller groups signals received by the plurality of photodiodes and calculates a location of the object by using a difference between a signal of a first group and a signal of a second group.

2. The image sensor of claim 1, wherein, when the plurality of photodiodes are four,
the first group comprises two photodiodes disposed on a left location, and
the second group comprises two photodiodes disposed on a right location.

3. The image sensor of claim 1 or 2, wherein the controller compares a first amplitude of the signal of the first group with a second amplitude of the signal of the second group.

4. The image sensor of claim 3, wherein, when there is no disparity between the first amplitude and the second amplitude, the controller determines that the object is disposed on an in-focus location, and
when there is a disparity between the first amplitude and the second amplitude, the controller determines that the object is disposed on an out-of-focus location.

5. The image sensor of any one the preceding claims, wherein the one frequency is repeated at least twice within a maximum distance of an infinity focus of the one lens.

6. A control method of an image sensor, the control method comprising:
a step of emitting a signal having a single frequency;
a step of receiving a signal reflected from an object through one lens and a plurality of photodiodes;
a step of grouping signals received by the plurality of photodiodes; and
a step of calculating a location of the object by using a difference between a signal of a first group and a signal of a second group.

7. The control method of claim 6, wherein, when the plurality of photodiodes are four,
the first group comprises two photodiodes disposed on a left location, and
the second group comprises two photodiodes disposed on a right location.

8. The control method of claim 6 or 7, further comprising a step of comparing an amplitude of the signal of the first group with an amplitude of the signal of the second group.

9. The control method of claim 8, further comprising:
a step of, when there is no disparity between the first amplitude and the second amplitude, determining that the object is disposed on an in-focus location, and
a step of, when there is a disparity between the first amplitude and the second amplitude, determining that the object is disposed on an out-of-focus location.

10. The control method of any one of claims 6-9, wherein the one frequency is repeated at least twice within a maximum distance of an infinity focus of the one lens.
